# EUROPÄISCHE PATENTSCHRIFT

(11) **EP 3 057 038 B1**
(45) Veröffentlichungstag und Bekanntmachung des Hinweises auf die Patenterteilung: **06.12.2017**
(21) Anmeldenummer: 15154592.8
(22) Anmeldetag: 11.02.2015
(51) Int. Cl.: G06K 19/06

(54) **Optoelektronische Vorrichtung**
Optoelectronic device
Dispositif optoélectronique

(43) Veröffentlichungstag der Anmeldung: 17.08.2016
(73) Patentinhaber: Leuze electronic GmbH + Co KG, 73277 Owen/Teck (DE)
(72) Erfinder: Claus, Armin, 72622 Nürtingen (DE)
(74) Vertreter: Ruckh, Rainer Gerhard

(56) Entgegenhaltungen:
- US-A- 4 004 690
- US-A- 5 789 732
- US-A1- 2009 261 166
- Melanie Pinola: "How to Share Your Wi-Fi Network with Friends, No Password Typing Required", , 15. März 2013 (2013-03-15), XP55201909, Gefunden im Internet: URL:http://lifehacker.com/5835743/how-to-s hare-your-wi-fi-network-with-android-users -with-a-qr-code-and-barcode-scanner [gefunden am 2015-07-13]

## Beschreibung

Die Erfindung betrifft eine optoelektronische Vorrichtung gemäß dem Oberbegriff des Anspruchs 1.
Eine derartige optoelektronische Vorrichtung umfasst einen optischen Sensor mit einer Empfangseinheit, die einen Bildsensor mit einer vorgeordneten Empfangsoptik aufweist. Der Bildsensor besteht aus einer matrixförmigen Anordnung von Empfangselementen. Insbesondere kann der Bildsensor von einer CMOS-Matrix oder einer CCD-Matrix gebildet sein. Die Empfangsoptik dient dazu, von einem zu erfassenden Objekt reflektierte Lichtstrahlen auf den Bildsensor zu führen. Zudem weist der optische Sensor typischerweise eine Beleuchtungseinheit auf. Weiterhin umfasst der optische Sensor eine Steuer- und Auswerteeinheit. Die Steuer- und Auswerteeinheit dient zur Ansteuerung von Sensorkomponenten des optischen Sensors und zur Auswertung von Empfangssignalen des Bildsensors.
Derartige optische Sensoren können insbesondere zur Erfassung von Marken dienen, wobei die Marken insbesondere als Barcodes oder 2D-Code mit zweidimensionalen Codemustern ausgebildet sein können.
Um einen optischen Sensor an eine jeweilige Applikation anzupassen muss dieser typischerweise vor Aufnahme seines Arbeitsbetriebs parametriert werden. Ein Beispiel für derartige Parametrierungen ist die Anpassung an bestimmte zu lesende Marken. Weiterhin ist es üblich, mehrere optische Sensoren in Netzwerken einzusetzen. Damit die optischen Sensoren im Netzwerk eindeutig identifiziert werden können und von einer Steuereinheit angesprochen werden können, ist es erforderlich jedem optischen Sensor eine eindeutige IP-Adresse zuzuteilen. Diese Zuweisung erfolgt in einem Parametriervorgang. Bei bekannten optischen Sensoren erfolgt eine derartige Vergabe von IP-Adressen über eine Anzahl von Drehschaltern, die dem jeweiligen optischen Sensor zugeordnet sein müssen, beispielsweise in einem Parametriergerät, oder sogar am optischen Sensor selbst angeordnet sein müssen. Typischerweise muss eine große Anzahl von Drehschaltern vorgesehen sein, wodurch ein unerwünscht hoher konstruktiver Aufwand entsteht. Weiterhin sind zur Durchführung von Parametervorgängen auch Einstellvorrichtungen mit Displays und Tasten zur Dateneingabe im Einsatz. Auch derartige Einstellvorrichtungen bedingen einen hohen konstruktiven Aufwand für den Parametriervorgang.

Schließlich ist es bekannt, dass in Handbüchern, das heißt technischen Beschreibungen von optischen Sensoren Parametercodes abgedruckt sind, anhand deren eine Parametrierung des jeweiligen optischen Sensors erfolgen kann. Diese können jedoch nicht oder nur eingeschränkt zu Parameterzwecken verwendet werden, da in derartigen Handbüchern eine Vielzahl unterschiedlicher Parametercodes nebeneinander abgedruckt ist, so dass ein einzelnes selektives Lesen nur eines Parametercodes mittels eines optischen Sensors nicht eindeutig möglich ist. Zudem werden optische Sensoren häufig in räumlich beengten Applikationen eingesetzt, so dass in diesem Bereich das Handbuch überhaupt nicht eingebracht werden kann.

Die US 4 004 690 A betrifft einen Couponhalter, in dem eine Vielzahl von Coupons, das heißt Rabattmarken abgelegt werden kann. Zur Präsentation einzelner Coupons kann ein Fach des Couponhalters, in dem sich dieser Coupon befindet, aufgeklappt werden.

In Melanie Pinola: "Hot to Share Your Wi-Fi Network with Friends, No Password Typing Required", 15. März 2013 (2013-03-15), XP55201909, ist ein Verfahren beschrieben, bei welchem ein Benutzer durch Lesen eines QR-Codes ohne Passwort-Eingabe Zugang zu einem passwortgeschützten fremden Wi-Fi-Netzwerk erlangen kann.

Die US 5 789 732 A betrifft eine Kundendatenvorrichtung mit zwei LCD-Displays. Auf einem ersten LCD-Display werden einem Kunden Barcodes präsentiert. Wählt der Kunde einen Barcode aus, wird dem Kunden auf dem anderen LCD-Display die Kundeninformation angezeigt, die für diesen Barcode hinterlegt ist.

Die US 2009/0261166 A1 betrifft ein Verfahren, bei welchen über Barcodes Informationen mehrerer Karten, wie zum Beispiel Kreditkarten oder Kundenkarten, auf einer übergeordneten Karte zusammengefasst werden, sodass mit der übergeordneten Karte die Funktionen der einzelnen Karten emuliert werden können.

Der Erfindung liegt die Aufgabe zugrunde, eine optoelektronische Vorrichtung der eingangs genannten Art bereitzustellen, welche bei geringem konstruktivem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine optoelektronische Vorrichtung mit einem optischen Sensor. Der optische Sensor umfasst eine Empfangseinheit mit einem Bildsensor, und dient mit einer Steuer- und Auswerteeinheit zur Auswertung von Empfangssignalen des Bildsensors, und mit Mitteln zur Parametrierung des optischen Sensors. Als Mittel zur Parametrierung ist eine Parameterpräsentationseinheit vorgesehen, welche dazu ausgebildet ist einzelne Parametercodes sichtbar anzuzeigen. Der optische Sensor wird dadurch parametriert, in dem der angezeigte Parametercode mittels des Bildsensors gelesen und in der Steuer-und Auswerteeinheit ausgewertet wird.

Die Parametrierung kann selbsttätig oder durch eine Anweisung wie zum Beispiel einen Tastendruck erfolgen.

Mit der dem optischen Sensor zugeordneten erfindungsgemäßen Parameterpräsentationseinheit kann eine Bedienperson einfach und schnell sowie ohne großen konstruktiven Aufwand eine Parametrierung des optischen Sensors vornehmen.

Wesentlich hierbei ist, dass die Parameterpräsentationseinheit zwar prinzipiell mehrere Parametercodes tragen kann, mittels derer unterschiedliche Parametriervorgänge durchgeführt werden können. Jedoch ist die Parameterpräsentationseinheit derart ausgebildet, dass mit dieser gezielt nur ein Parametercode sichtbar angezeigt werden kann. Dies erfolgt nach Auswahl einer Bedienperson, das heißt die Bedienperson stellt die Parameterpräsentationseinheit so ein, dass mit dieser nur der Parametercode angezeigt wird, der für den gewünschten Parametriervorgang benötigt wird. Der Parametriervorgang erfolgt dann einfach dadurch, dass der Bildsensor des zu parametrierenden optischen Sensors den Parametercode selbst liest, worauf anhand der im Parametercode enthaltenen Information die Steuer- und Auswerteeinheit des optischen Sensors die Parametrierung völlig selbsttätig durchführt.

Damit entfallen konstruktiv aufwändige separate Parametriervorrichtungen mit Drehschaltern, Tasten, Displays und dergleichen, wodurch der konstruktive Aufwand der Parametrierung eines optischen Sensors äußerst gering gehalten werden kann.

Ein weiterer wesentlicher Vorteil der Erfindung besteht darin, dass mit der Parameterpräsentationseinheit selektiv nur der jeweils zur Parametrierung erforderliche Parametercode angezeigt wird. Damit sind fehlerhafte Parametrierungen durch Lesen eines falschen Parametercodes ausgeschlossen.

Die Parameterpräsentationseinheit bildet weiter vorteilhaft eine handliche, tragbare Einheit, die auch in beengten Einbauverhältnissen eines optischen Sensors einfach an diesem positioniert werden kann, sodass der optische Sensor den an der Parameterpräsentationseinheit angezeigten Parametercode sicher lesen kann.

Besonders vorteilhaft bildet die Parameterpräsentationseinheit eine mechanische Einheit.

Damit kann auch auf rein mechanischem Weg der Parametercode, der zur Parametrierung des optischen Sensors verwendet werden soll, allein an der Parameterpräsentationseinheit sichtbar präsentiert werden. Vorteilhaft weist hierzu die Parameterpräsentationseinheit geeignete mechanische Einstellmittel auf. Die so ausgebildete Parameterpräsentationseinheit weist einen einfachen, leicht handhabbaren Aufbau auf. Zudem ist die Parameterpräsentationseinheit kostengünstig herstellbar.

Gemäß einer besonders vorteilhaften Ausgestaltung der Erfindung weist die Parameterpräsentationseinheit einen Codeträger mit mehreren Parametercodes auf, welchem ein Markierungsmittel zur Sichtbarmachung einzelner Parametercodes zugeordnet ist.

Der Codeträger bildet eine kompakte, tragbare Einheit und besteht im einfachsten Fall aus einer Scheibe, auf welcher unterschiedliche Parametercodes vorhanden, vorzugsweise aufgedruckt sind. Mit dem dem Codeträger zugeordneten Markierungsmittel kann dann eine Bedienperson gezielt nur einen Parametercode am Codeträger sichtbar machen, so dass nur dieser vom Bildsensor des optischen Sensors zu deren Parametrierung genutzt wird. Die so ausgebildete Parameterpräsentationseinheit weist einen besonders einfachen und kostengünstigen Aufbau auf.

Besonders vorteilhaft ist dem Codeträger als Markierungsmittel eine aus undurchsichtigem Material bestehende Schablone zugeordnet, welche wenigstens Sichtfenster aufweist. Das Sichtfenster ist an einem Parametercode positionierbar, so dass dieser durch die Schablone sichtbar ist.

Dabei bildet vorteilhaft die Schablone eine Abdeckung des Codeträgers.

Die so ausgebildete Parameterpräsentationseinheit ist besonders einfach handhabbar und damit sehr bedienerfreundlich. Durch eine geeignete Positionierung der Schablone mit dem Sichtfenster kann einfach und schnell der gewünschte Parametercode durch das Sichtfenster sichtbar gemacht werden, während mit dem Rest der Schablone alle anderen Parametercodes abdeckt werden und somit nicht sichtbar sind.

Prinzipiell kann zur Sichtbarmachung eines Parametercodes die Schablone relativ zum Codeträger verschoben werden, bis das Sichtfenster so positioniert ist, dass durch dieses nur der gewünschte Parametercode sichtbar ist.

Gemäß einer besonders vorteilhaften Ausgestaltung ist die Schablone drehbar gelagert. Durch einfaches Drehen der Schablone relativ zum Empfänger kann somit der gewünschte Parametercode gewählt, das heißt durch das Sichtfenster sichtbar gemacht, das heißt angezeigt werden. Da die Schablone am Codeträger drehbar gelagert ist, sind diese Einheiten unverlierbar aneinander gelagert und bilden so eine kompakte einfach handhabbare Baueinheit.

Gemäß einer alternativen Ausgestaltung ist die Schablone fest auf dem Codeträger angeordnet und das Sichtfenster der Schablone verschiebbar angeordnet. Das Sichtfenster kann dann beispielsweise als verschiebbare Maske von einem Schlitz der Schablone angeordnet sein.

Auch in diesem Fall bildet der Codeträger mit der Schablone eine kompakte Baueinheit. Das Verschieben des Sichtfensters stellt eine einfache Einstellmöglichkeit dar, um gezielt einen der Parametercodes am Codeträger sichtbar zu machen.

Bei allen vorgenannten Varianten der Parameterpräsentationseinheit können die Parametercodes allgemein von optischen Mustern aller Art gebildet sein. Damit kann allgemein eine Vielzahl unterschiedlicher Parameter codiert werden.

Besonders vorteilhaft ist der oder jeder Parametercode eine Steuerzeichen enthaltende Marke. Insbesondere ist die Marke ein 2D-Code.

Diese Ausführungsform ist insbesondere dann vorteilhaft, wenn der zu parametrierende optische Sensor auch in seinem Arbeitsbetrieb zur Erfassung von Marken, insbesondere Barcodes oder 2D-Codes, genutzt wird. Dann kann zumindest teilweise die Auswertesoftware des optischen Sensors, die zur Erkennung von Marken im Arbeitsbetrieb des optischen Sensors verwendet wird, auch zur Erfassung von Parametercodes genutzt werden. Durch Lesen der Steuerzeichen in den Parametercodes werden im optischen Sensor selbsttätig die entsprechenden Parametriervorgänge ausgelöst. Damit wird der konstruktive Aufwand zur Parametrierung äußerst gering gehalten.

Gemäß einer weiteren Variante der Erfindung weist die Parameterpräsentationseinheit einen Codeträger mit mehreren Codefeldern auf, wobei einzelne Codefelder, die sich zu einem Parametercode ergänzen, am Codeträger markierbar sind, so dass diese selektiv vom Beleuchtungseinheit lesbar sind.

Bei dieser Variante kann eine Bedienperson durch Markieren, insbesondere durch Ankreuzen von Codefeldern den Code auf dem Codeträger selbst definieren. Die markierten Codefelder bilden dann Teilcodes, die im optischen Sensor, nachdem mit dem Bildsensor der Codeträger erfasst wurde, zum gesamten Parametercode zusammengefügt werden. Die Reihenfolge der Teilcodes ergibt sich insbesondere aus einer definierten geometrischen Anordnung der Codefelder auf dem Codeträger. Damit kann im optischen Sensor anhand des Lesens der Informationen auf dem Codeträger der gesamte Parametercode eindeutig identifiziert werden und abhängig hiervon selbst die Parametrierung durchgeführt werden.

Besonders vorteilhaft weist der Codeträger eine matrixförmige Anordnung von Codefeldern auf.

Dabei kodieren die Codefelder alphanummerische Zeichen, also Ziffern und Buchstaben.

Die Ziffern der Codefelder sind nicht in Klartext angegeben. Vielmehr ergeben sich vorteilhaft die Werte der Ziffern aus der Anordnung der jeweiligen Codefelder in der matrixförmigen Gesamtanordnung der Codefelder. Die Erfassung des gesamten Parametercodes kann sehr schnell und zuverlässig erfolgen.

Entsprechend der Ausbildung der einzelnen Codefelder als Werte von Ziffern ist dann der gesamte Parametercode von einer Ziffernfolge gebildet.

Damit eignet sich diese Variante der Parameterpräsentationseinheit besonders gut für die Anzeige von IP-Adressen. Diese IP-Adressen werden für optische Sensoren benötigt, die in Rechner-Netzwerken betrieben werden. In einem solchen Rechner-Netzwerk werden die optischen Sensoren von einer Steuereinheit unter IP-Adressen angesprochen. Da IP-Adressen in jeder Applikation unterschiedlich sind, können diese nicht vorab definiert werden. Daher muss in einem Parametriervorgang vor Aufnahme des Arbeitsbetriebs des Rechner-Netzwerks jedem optischen Sensor eindeutig eine IP-Adresse zugewiesen werden. Dieser Parametriervorgang kann mit der erfindungsgemäßen Parameterpräsentationseinheit äußerst einfach und schnell durchgeführt werden. Durch Markieren insbesondere Ankreuzen bestimmter Codefelder gibt eine Bedienperson die IP-Adresse vor, die dann vom optischen Sensor gelesen und dann automatisch für den Betrieb im Rechner-Netzwerk übernommen wird.

Die vorgenannten Ausführungsbespiele können dahingehend modifiziert beziehungsweise erweitert sein, dass Parametercodes auf einem Codeträger in Klarschrift, das heißt in Form von Buchstaben- und/oder Ziffernfolgen aufgebracht werden. Die so ausgebildeten Parametercodes können dann im optischen Sensor erfasst und gelesen werden, wenn dort eine entsprechende Software, insbesondere eine OCR (optical character recognition)- oder eine OCV (optical character verification)- Software implementiert ist.

Die Erfindung wird im Folgenden anhand der Zeichnungen erläutert.
- Figur 1:: Schematische Darstellung eines Ausführungsbeispiels eines op-tischen Sensors als Bestandteil der erfindungsgemäßen optoelektronischen Vorrichtung.
- Figur 2:: Erstes Ausführungsbeispiel einer Parameterpräsentationseinheit für die erfindungsgemäße optoelektronische Vorrichtung.
- Figur 3a, b:: Einzeldarstellung eines Codeträgers und einer Schablone für die Parameterpräsentationseinheit gemäß Figur 2.
- Figur 4:: Zweites Ausführungsbeispiel einer Parameterpräsentationsein-heit für die erfindungsgemäße optoelektronische Vorrichtung.

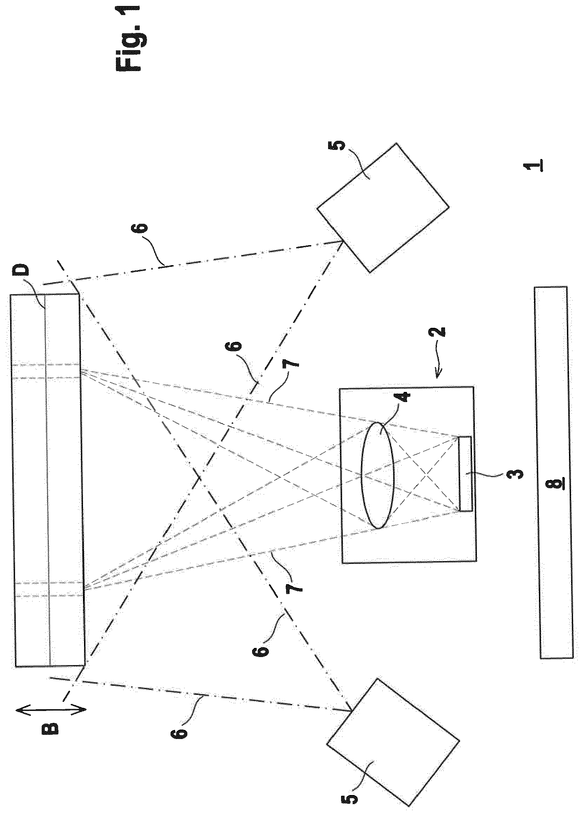

Figur 1 zeigt ein Ausführungsbeispiel des erfindungsgemäßen optischen Sensors 1. Der optische Sensor 1 dient im vorliegen Fall zur Erfassung von Marken, insbesondere Barcodes oder 2D-Codes.

Der optische Sensor 1 weist eine Empfangseinheit 2 mit einem Bildsensor 3 und einer vorgeordneten Empfangsoptik 4 auf Der Bildsensor 3 weist eine matrixförmige Anordnung von Empfangselementen auf Der Bildsensor 3 ist vorteilhaft von einem matrixförmigen CMOS-Sensor oder CCDE-Sensor gebildet. Die Empfangsoptik 4 besteht aus einer oder mehreren Linsen 10, 14.

Der Empfangseinheit 2 sind als Beleuchtungseinheit zwei Lichtquellen 5 zugeordnet. Die Lichtquellen 5 sind baugleich ausgebildet und in gleichen Abständen beidseits des Bildsensors 3 angeordnet. Die Lichtquellen 5 sind im vorliegenden Fall von LED-Anordnungen gebildet.

Figur 1 zeigt schematisch den Strahlengang der von den Lichtquellen 5 ausgehenden Sendelichtstrahlen 6 und der von einem nicht dargestellten Objekt zurückreflektierten Empfangslichtstrahlen 7.

Wie aus Figur 1 ersichtlich, wird das Lesefeld D mit dem Tiefenschärfebereich B von den Lichtquellen 5 ausgeleuchtet und eine dort angeordnete Marke durch die Empfangsoptik 4 auf den Bildsensor abgebildet.

Der optische Sensor 1 weist weiterhin eine Steuer- und Auswerteeinheit 8 auf. Die Steuer- und Auswerteeinheit 8 ist beispielsweise von einem Mikroprozessor gebildet und dient zur Ansteuerung von Komponenten des optischen Sensors 1. Zudem werden in der Steuer- und Auswerteeinheit 8 die in der Empfangseinheit 2 generierten Empfangssignale zur Erkennung der Marken ausgewertet.

Die Komponenten des optischen Sensors 1 können in einem nicht dargestellten Gehäuse integriert sein.

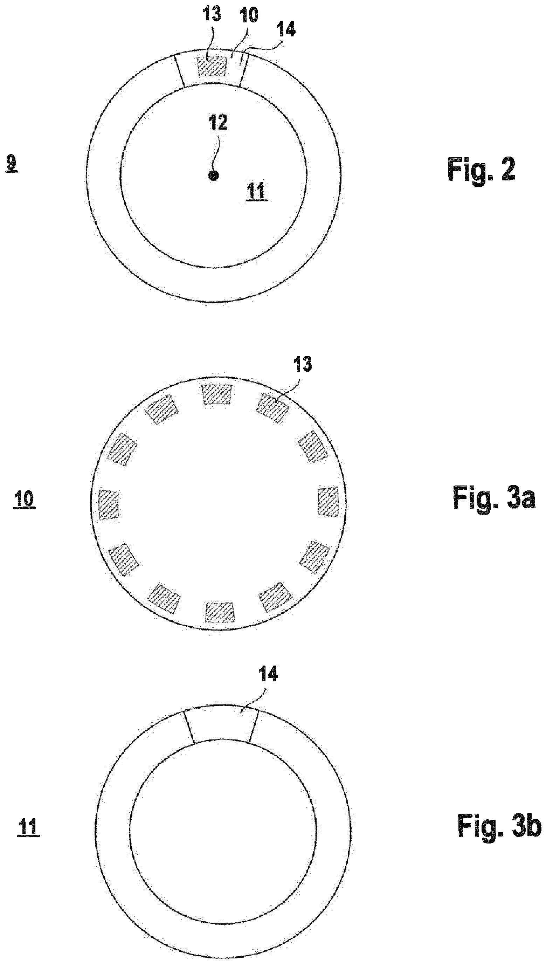

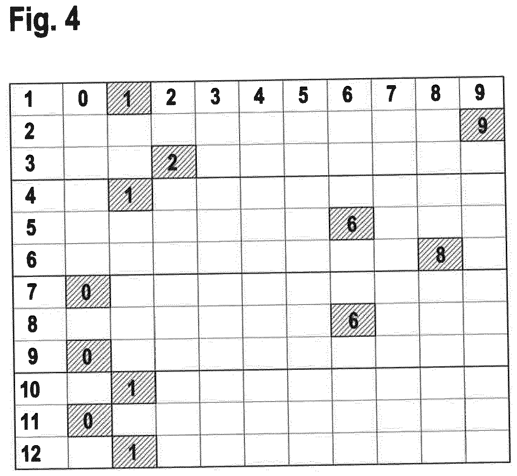

Vor Aufnahme des Arbeitsbetriebs des optischen Sensors wird dieser parametriert. Zur Durchführung des Parametriervorgangs wird eine Parameterpräsentationseinheit 9 als weiterer Bestandteil der optoelektronischen Vorrichtung eingesetzt. Die Figuren 2 und 4 zeigen zwei Ausführungsbeispiele einer Parameterpräsentationseinheit 9. Generell ist die Parameterpräsentationseinheit 9 als mechanische Einheit derart ausgebildet, dass an dieser nur ein Parametercode 13 von vorzugsweise mehreren Parametercodes 13 angezeigt, das heißt sichtbar präsentiert wird, so dass der Parametercode 13 vom optischen Sensor 1 gelesen werden kann, worauf der optische Sensor 1 in Abhängigkeit von im Parametercode 13 enthaltenen Parametrierinformationen selbsttätig die Parametrierung durchführt.

Bei der Ausführungsform gemäß Figur 2 ist die Parameterpräsentationseinheit 9 von einem Codeträger 10 und einer darauf drehbar gelagerten Schablone 11 gebildet. Der Codeträger 10 ist in Figur 3a in einer Einzeldarstellung dargestellt, die Schablone 11 ist in Figur 3b einzeln dargestellt.

Der Codeträger10 und die Schablone 11 sind in Form von Scheiben ausgebildet, wobei beide Scheiben denselben Durchmesser aufweisen. Der Durchmesser liegt etwa zwischen 10 und 20 cm, so dass die Parameterpräsentationseinheit 9 eine mit einer Hand bequem tragbare Einheit bilden. Die den Codeträger 10 und die Schablone 11 bildenden Scheiben können aus Pappe, Karton, Kunststoff und dergleichen bestehen. Zur Ausbildung einer Drehlagerung 12 sind der Codeträger 10 und die Schablone 11 von einem Stift, Drehknopf oder dergleichen durchsetzt. Die Drehlagerung 12 befindet sich im Zentrum des Codeträgers 10 der Schablone 11.

Wie aus Figur 3a ersichtlich sind auf der Oberseite des Codeträgers 10 mehrere Parametercodes 13 aufgebracht. Die Parametercodes 13 sind entlang des Randes des Codeträgers 10 umlaufend jeweils in Abstand zueinander angeordnet. Die Parametercodes 13 können allgemein von flächigen optischen Mustern gebildet sein. Im vorliegenden Fall sind die Parametercodes 13 als Marken, spezifisch als 2D-Codes ausgebildet, welche Steuerzeichen für Parametrierung des optischen Sensors 1 enthalten.

Die in Figur 3b dargestellte Schablone 11 besteht aus einem undurchsichtigen Material, wobei im Randbereich der Schablone 11 ein Sichtfenster 14 eingearbeitet ist, dessen Größe an die Größe eines Parametercodes 13 angepasst ist.

Zur Durchführung eines Parametriervorgangs wird die Schablone 11 relativ zum Codeträger 10 so gedreht, dass der zur Parametrierung benötigte Parametercode 13 durch das Sichtfenster 14 sichtbar ist. Das Sichtfenster 14 ist so groß, dass der Parametercode 13 vollständig sichtbar ist. Alle anderen Parametercodes 13 werden durch die Schablone 11 abgedeckt.

Die Parameterpräsentationseinheit 9 wird dann vor den optischen Sensor 1 gehalten, so dass der Parametercode 13 mit dem Bildsensor 3 gelesen werden kann. Anhand der im Parametercode 13 enthaltenen Steuerzeichen führt dann der optische Sensor 1 selbsttätig die Parametrierung durch. Alternativ kann die Parametrierung auch auf eine Anweisung wie einen Tastendruck durchgeführt werden.

Figur 4 zeigt ein zweites Ausführungsbeispiel einer Parameterpräsentationseinheit 9. Diese Parameterpräsentationseinheit 9 ist von einem rechteckigen scheibenförmigen Körper gebildet. Der Körper kann aus Karton, Pappe, Kunststoff oder im einfachsten Fall aus einem Blatt Papier bestehen.

Mit der Parameterpräsentationseinheit 9 kann als Parameterwert eine IP-Adresse für einen optischen Sensor 1 vergeben werden. Eine derartige IP-Adresse ist für einen optischen Sensor 1 dann erforderlich, wenn er in einem Rechner-Netzwerk mit mehreren Teilnehmern, insbesondere mehreren optischen Sensoren 1 eingesetzt wird. Unter der IP-Adresse, die als eindeutige Kennung vergeben wird, kann dann der optische Sensor 1 von einer Steuereinheit im Rechner-Netzwerk angesprochen werden.

Die IP-Adresse besteht im vorliegenden Fall aus einer 12-stelligen Zahl. Entsprechend hierzu ist die Parameterpräsentationseinheit 9 gemäß Figur 4 derart aufgebaut, dass diese eine entsprechende Anzahl von Codefeldern aufweist. Wie aus Figur 4 ersichtlich weist dabei die Parameterpräsentationseinheit 9 zwölf Zeilen (mit jeweils zehn Codefeldern entsprechend den Ziffern 0 bis 9 auf. Die Zeilen 1 bis 12 sind am linken Rand der Parameterpräsentationseinheit 9 durchnummeriert. Die nachfolgenden rechteckigen Codefelder mit den Ziffern 0 bis 9 weisen jeweils gleiche Abmessungen auf und sind insbesondere für alle Zeilen 1 bis 12 identisch ausgebildet.

Eine Bedienperson wählt eine IP-Adresse aus, indem sie in jeder Zeile jeweils eine Ziffer markiert. Im vorliegenden Fall sind die markierten Codefelder schwarz hinterlegt. Die Markierung kann beispielsweise dadurch erfolgen, dass am jeweiligen Codefeld eine Abziehfolie abgezogen wird. Im einfachsten Fall kann die Bedienperson das jeweilige Codefeld mit einem Stift ankreuzen.

Im vorliegenden Fall besteht die IP-Adresse aus der 12-stelligen Ziffernfolge 192.168.60.101. Diese Ziffernfolge wird in der Parameterpräsentationseinheit 9 gemäß Figur 4 derart kodiert, dass in der ersten Zeile die Ziffer 1, in der zweiten Zeile die Ziffer 9, in der dritten Zeile die Ziffer 2 und so weiter bis in der zwölften Zeile die Ziffer 1 markiert wird.

Die so markierte Parameterpräsentationseinheit 9 wird dann vom optischen Sensor 1 gelesen. In dem Ausführungsbeispielgemäß 4 sind die markierten Codefelder der Übersichtlichkeit halber mit den jeweiligen Ziffernwerten gekennzeichnet. Diese Kennzeichnung dient lediglich als Orientierungshilfe für die Bedienperson. Für das Lesen der IP-Adresse mittels des optischen Sensors 1 ist diese Kennzeichnung nicht erforderlich. Der Bildsensor 3 erkennt vielmehr die einzelnen markierten Codefelder allein an ihren Positionen innerhalb der Codefeld-Matrix. Sobald der diese die IP-Adresse gelesen hat übernimmt diese der optische Sensor 1 und ist somit für den Betrieb im Rechner-Netzwerk bereit.

### Bezugszeichenliste

(1) Optischer Sensor
(2) Empfangseinheit
(3) Bildsensor
(4) Empfangsoptik
(5) Lichtquelle
(6) Sendelichtstrahlen
(7) Empfangslichtstrahlen
(8) Steuer- und Auswerteeinheit
(9) Parameterpräsentationseinheit
(10) Codeträger
(11) Schablone
(12) Drehlagerung
(13) Parametercode
(14) Sichtfenster

## Patentansprüche

1. Optoelektronische Vorrichtung mit einem optischen Sensor umfassend eine Empfangseinheit (2) mit einem Bildsensor (3), mit einer Steuer- und Auswerteeinheit (8) zur Auswertung von Empfangssignalen des Bildsensors (3), und mit Mitteln zur Parametrierung des optischen Sensors, **dadurch gekennzeichnet, dass** als Mittel zur Parametrierung eine Parameterpräsentationseinheit (9) vorgesehen ist, welche dazu ausgebildet ist einzelne Parametercodes (13) sichtbar anzuzeigen, und dass der optische Sensor (1) dadurch parametriert wird, in dem der angezeigte Parametercode (13) mittels des Bildsensors (3) gelesen und in der Steuer- und Auswerteeinheit (8) ausgewertet wird.

2. Optoelektronische Vorrichtung nach Anspruch 1, **dadurch gekennzeichnet, dass** die Parameterpräsentationseinheit (9) eine mechanische Einheit bildet.

3. Optoelektronische Vorrichtung nach Anspruch 2, **dadurch gekennzeichnet, dass** die Parameterpräsentationseinheit (9) einen Codeträger (10) mit mehreren Parametercodes (13) aufweist, welchem ein Markierungsmittel zur Sichtbarmachung einzelner Parametercodes (13) zugeordnet ist.

4. Optoelektronische Vorrichtung nach Anspruch 3, **dadurch gekennzeichnet, dass** dem Codeträger (10) als Markierungsmittel eine aus undurchsichtigem Material bestehende Schablone (11) zugeordnet ist, welche wenigstens Sichtfenster (14) aufweist, wobei das Sichtfenster (14) an einem Parametercode (13) positionierbar ist, so dass dieser durch die Schablone (11) sichtbar ist.

5. Optoelektronische Vorrichtung nach Anspruch 4, **dadurch gekennzeichnet, dass** die Schablone (11) eine Abdeckung des Codeträgers (10) bildet.

6. Optoelektronische Vorrichtung nach Anspruch 5, **dadurch gekennzeichnet, dass** die Schablone (11) drehbar oder verschiebbar auf dem Codeträger (10) gelagert ist.

7. Optoelektronische Vorrichtung nach Anspruch 5, **dadurch gekennzeichnet, dass** die Schablone (11) fest auf dem Codeträger (10) angeordnet ist und dass das Sichtfenster (14) der Schablone (11) verschiebbar angeordnet ist.

8. Optoelektronische Vorrichtung nach einem der Ansprüche 4 bis 7, **dadurch gekennzeichnet, dass** der oder jeder Parametercode (13) ein Steuerzeichen enthaltendes optisches Muster ist.

9. Optoelektronische Vorrichtung nach Anspruch 8, **dadurch gekennzeichnet, dass** der oder jeder Parametercode (13) eine Steuerzeichen enthaltende Marke ist.

10. Optoelektronische Vorrichtung nach Anspruch 9, **dadurch gekennzeichnet, dass** die Marke ein 2D-Code ist.

11. Optoelektronische Vorrichtung nach einem der Ansprüche 1 oder 2, **dadurch gekennzeichnet, dass** die Parameterpräsentationseinheit (9) einen Codeträger (10) mit mehreren Codefeldern aufweist, wobei einzelne Codefelder, die sich zu einem Parametercode (13) ergänzen, am Codeträger (10) markierbar sind, so dass diese selektiv vom optischen Sensor (1) lesbar sind.

12. Optoelektronische Vorrichtung nach Anspruch 11, **dadurch gekennzeichnet, dass** die Codefelder alphanummerische Zeichen kodieren.

13. Optoelektronische Vorrichtung nach einem der Ansprüche 11 oder 12, **dadurch gekennzeichnet, dass** der Codeträger (10) eine matrixförmige Anordnung von Codefeldern aufweist.

14. Optoelektronische Vorrichtung nach einem der Ansprüche 11 bis 13, **dadurch gekennzeichnet, dass** der Parametercode (13) eine IP-Adresse ist.

15. Optoelektronische Vorrichtung nach einem der Ansprüche 1 oder 2, **dadurch gekennzeichnet, dass** die Parameterpräsentationseinheit (9) einen Codeträger (10) aufweist, auf welchem wenigstens ein Parametercode (13) in Form einer Ziffern- und/oder Buchstabenfolge dargestellt ist.

## Claims

1. Optoelectronic device with an optical sensor comprising a receiving unit (2) with an image sensor (3), with a controlling and evaluating unit (8) for evaluation of received signals of the image sensor (3), and with means for parameterising the optical sensor, **characterised in that** provided as means for parameterising is a parameter presentation unit (9) constructed for the purpose of visibly displaying individual parameter codes (13) and that the optical sensor (1) is parameterised **in that** the displayed parameter code (13) is read by means of the image sensor (3) and evaluated in the controlling and evaluating unit (8).

2. Optoelectronic device according to claim 1, **characterised in that** the parameter presentation unit (9) forms a mechanical unit.

3. Optoelectronic device according to claim 2, **characterised in that** the parameter presentation unit (9) comprises a code carrier (10) with a plurality of parameter codes (13), with which a marking means for making individual parameter codes (13) visible is associated.

4. Optoelectronic device according to claim 3, **characterised in that** a template (11), which consists of non-transparent material which has at least one viewing window (14), is associated with the code carrier (10) as marking means, wherein the viewing window (14) is positionable at a parameter code (13) so that this is visible through the template (11).

5. Optoelectronic device according to claim 4, **characterised in that** the template (11) forms a cover of the code carrier (10).

6. Optoelectronic device according to claim 5, **characterised in that** the template (11) is mounted on the code carrier (10) to be rotatable or displaceable.

7. Optoelectronic device according to claim 5, **characterised in that** the template (11) is fixedly arranged on the code carrier (10) and that the viewing window (14) of the template (11) is arranged to be displaceable.

8. Optoelectronic device according to any one of claims 4 to 7, **characterised in that** the or each parameter code (13) is an optical pattern containing control symbols.

9. Optoelectronic device according to claim 8, **characterised in that** the each or parameter code (13) is a mark containing control symbols.

10. Optoelectronic device according to claim 9, **characterised in that** the mark is a 2D code.

11. Optoelectronic device according to one of claims 1 and 2, **characterised in that** the parameter presentation unit (9) comprises a code carrier (10) with a plurality of code fields, wherein individual code fields which combine to form a parameter code (13) can be marked at the code carrier (10) so that these are selectively readable by the optical sensor (1).

12. Optoelectronic device according to claim 11, **characterised in that** the code fields encode alphanumeric symbols.

13. Optoelectronic device according to one of claims 11 and 12, **characterised in that** the code carrier (10) comprises a matrix-shaped arrangement of code fields.

14. Optoelectronic device according to any one of claims 11 to 13, **characterised in that** the parameter code (13) is an Internal protocol address.

15. Optoelectronic device according to one of claims 1 and 2, **characterised in that** the parameter presentation unit (9) comprises a code carrier (10) on which at least one parameter code (13) in the form of a numeral and/or letter sequence is represented.

## Revendications

1. Dispositif optoélectronique doté d'un capteur optique comprenant une unité de réception (2) avec un capteur d'image (3), d'une unité de commande et d'évaluation (8) pour évaluer les signaux de réception du capteur d'image (3), et d'un moyen pour paramétrer le capteur optique, **caractérisé en ce qu'**il est prévu comme moyen de paramétrage une unité de présentation de paramètres (9) qui est conçue pour afficher de manière visible des codes de paramètre (13) individuels, et que le capteur optique (1) est paramétré en lisant le code de paramètre (13) affiché au moyen du capteur d'image (3) et en l'évaluant dans l'unité de commande et d'évaluation (8).

2. Dispositif optoélectronique selon la revendication 1, **caractérisé en ce que** l'unité de présentation de paramètres (9) forme une unité mécanique.

3. Dispositif optoélectronique selon la revendication 2, **caractérisé en ce que** l'unité de présentation de paramètres (9) présente un support de codes (10) avec plusieurs codes de paramètre (13), auquel est associé un moyen de marquage permettant de rendre visibles les codes de paramètre (13) individuels.

4. Dispositif optoélectronique selon la revendication 3, **caractérisé en ce qu'**au support de codes (10) est associé comme moyen de marquage un gabarit (11) composé d'un matériau opaque qui présente au moins une fenêtre de visualisation (14), la fenêtre de visualisation (14) pouvant être positionnée sur un code de paramètre (13) de telle sorte que celui-ci soit visible à travers le gabarit (11).

5. Dispositif optoélectronique selon la revendication 4, **caractérisé en ce que** le gabarit (11) forme un recouvrement du support de codes (10).

6. Dispositif optoélectronique selon la revendication 5, **caractérisé en ce que** le gabarit (11) est monté tournant ou coulissant sur le support de codes (10).

7. Dispositif optoélectronique selon la revendication 5, **caractérisé en ce que** le gabarit (11) est disposé fixe sur le support de codes (10) et que la fenêtre de visualisation (14) du gabarit (11) est disposée coulissante.

8. Dispositif optoélectronique selon l'une des revendications 4 à 7, **caractérisé en ce que** le ou chaque code de paramètre (13) est un motif optique contenant un caractère de commande.

9. Dispositif optoélectronique selon la revendication 8, **caractérisé en ce que** le ou chaque code de paramètre (13) est une marque contenant un caractère de commande.

10. Dispositif optoélectronique selon la revendication 9, **caractérisé en ce que** la marque est un code 2D.

11. Dispositif optoélectronique selon l'une des revendications 1 ou 2, **caractérisé en ce que** l'unité de présentation de paramètres (9) présente un support de codes (10) avec plusieurs champs de code, des champs de code individuels qui se complètent pour former un code de paramètre (13) pouvant être marqués sur le support de codes (10) de manière à pouvoir être lus sélectivement par le capteur optique (1).

12. Dispositif optoélectronique selon la revendication 11, **caractérisé en ce que** les champs de code codent des caractères alphanumériques.

13. Dispositif optoélectronique selon l'une des revendications 11 ou 12, **caractérisé en ce que** le support de codes (10) présente un arrangement matriciel de champs de code.

14. Dispositif optoélectronique selon l'une des revendications 11 à 13, **caractérisé en ce que** le code de paramètre (13) est une adresse IP.

15. Dispositif optoélectronique selon l'une des revendications 1 ou 2, **caractérisé en ce que** l'unité de présentation de paramètres (9) présente un support de codes (10) sur lequel au moins un code de paramètre (13) est représenté sous la forme d'une suite de chiffres et/ou de lettres.
